(19) Europäisches Patentamt / European Patent Office / Office européen des brevets

(11) **EP 2 546 976 B1**

(12) **FASCICULE DE BREVET EUROPEEN**

(45) Date de publication et mention de la délivrance du brevet:
**21.08.2013 Bulletin 2013/34**

(51) Int Cl.:
*H02P 1/58* *(2006.01)*    *H02P 5/74* *(2006.01)*

(21) Numéro de dépôt: **12171985.0**

(22) Date de dépôt: **14.06.2012**

(54) **Méthode de branchement à chaud d'un moteur sur un variateur de vitesse**

Verfahren zum verbinden eines laufenden Motors an einen Frequenzumrichter

Method for connecting a running motor to a variable speed drive

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2011 FR 1156339**

(43) Date de publication de la demande:
**16.01.2013 Bulletin 2013/03**

(73) Titulaire: **Schneider Toshiba Inverter Europe SAS 27120 Pacy sur Eure (FR)**

(72) Inventeurs:
• **Devos, Thomas 78955 Carrières sous Poissy (FR)**
• **Malrait, François 27120 Jouy sur Eure (FR)**

(74) Mandataire: **Dufresne, Thierry et al Schneider Electric Industries SAS Service Propriété Industrielle 35 rue Joseph Monier - CS 30323 92506 Rueil-Malmaison Cedex (FR)**

(56) Documents cités:
**JP-A- 58 207 897    JP-A- 59 123 489 JP-A- 59 198 887**

**Description**

**Domaine technique de l'invention**

La présente invention se rapporte à une méthode de branchement d'un moteur additionnel sur un variateur de vitesse déjà en charge et connecté à au moins un autre moteur. La méthode selon l'invention prévoit le branchement à chaud du moteur additionnel, sans court-circuit - ou bypass selon le terme anglais consacré - dudit variateur de vitesse pour l'alimentation du au moins un premier moteur.

**Etat de la technique**

De manière connue, un unique variateur de vitesse peut gérer plusieurs moteurs en parallèle, du moins des moteurs asynchrones.

La demande de brevet EP1426620 décrit un exemple de tel système. Pour permettre la connexion à chaud d'un moteur additionnel en parallèle d'un premier moteur déjà en charge sur un même variateur de vitesse, le document EP1426620 divulgue une méthode comprenant notamment la déconnexion du premier moteur du variateur de vitesse et son raccordement au réseau. Ensuite, le moteur additionnel est connecté au variateur de vitesse. Cette méthode est représentative de l'état de la technique et présente plusieurs inconvénients.

D'abord, selon ce document connu, la nécessité de connecter un moteur additionnel apparaît lorsque le premier moteur est en pleine charge et que plus de puissance est requise. Dans ce cas, lors d'une première phase, le premier moteur est déconnecté du variateur de vitesse et connecté au réseau d'alimentation électrique de sorte qu'il fonctionne en continu à plein régime. Lors d'une seconde phase, le moteur additionnel est connecté au variateur de vitesse. Cette méthode implique une perte de contrôle du premier moteur depuis le variateur de vitesse. De plus, lors de la première phase, un pic de courant est généré par la connexion du premier moteur sur le réseau.

Une variante connue de l'état de la technique consiste à avoir tous les moteurs branchés sur la sortie d'un variateur de vitesse. Dans ce cas, les moteurs restent commandables en permanence. L'état de l'art sur ce type de schéma prévoit l'ajout ou la suppression des moteurs en passant par une phase d'arrêt desdits moteurs. Sans séquence particulière, le branchement direct du moteur additionnel sur le variateur de vitesse à chaud entraîne un pic de courant pouvant être important et risquant d'entraîner une détérioration dudit moteur additionnel.

Les documents JP58207897 et JP59198887 divulguent des méthodes de connexion d'un moteur additionnel sur un variateur de vitesse en parallèle d'un premier moteur. Le document JP59123489 divulgue une méthode permettant de démarrer et d'accélérer successivement deux moteurs électriques en utilisant un seul variateur de vitesse.

Le but de l'invention est donc de proposer une solution de branchement à chaud d'un moteur additionnel sur un variateur de vitesse ne nécessitant, par définition, pas d'arrêt du système, n'impliquant pas de bypass du variateur de vitesse pour le ou les moteurs déjà en charge, et, surtout, n'entraînant pas de pic de courant important risquant de détériorer le moteur additionnel.

**Exposé de l'invention**

A cet effet, la présente invention a pour objet une méthode de connexion d'un moteur additionnel sur un variateur de vitesse en parallèle d'au moins un premier moteur en charge commandé par ledit variateur de vitesse ; la méthode selon l'invention comprend avantageusement les étapes suivantes :

- la déconnexion du au moins un premier moteur du variateur de vitesse ;
- la mise en oeuvre d'un estimateur d'état du au moins un premier moteur, basé sur un modèle de charge préalablement établi dudit au moins un premier moteur, ledit estimateur d'état étant apte à calculer l'évolution au cours du temps d'un état estimé du au moins un premier moteur, ledit état estimé comprenant au moins la vitesse dudit au moins un premier moteur ;
- la connexion du moteur additionnel sur le variateur de vitesse ;
- le démarrage du moteur additionnel avec pour consigne d'atteindre l'état estimé du au moins un premier moteur ;
- lorsque l'état du moteur additionnel atteint l'état estimé du au moins un premier moteur, la reconnexion dudit au moins un premier moteur.

Avantageusement, la méthode selon l'invention peut en outre comprendre, préalablement à l'étape de reconnexion du au moins un premier moteur, une étape de déconnexion du moteur additionnel suivie d'une étape de reconnexion du moteur additionnel sensiblement simultanément à la reconnexion du au moins un premier moteur.

Selon un mode de réalisation de l'invention, l'estimateur d'état du au moins un premier moteur est apte à calculer l'évolution au cours du temps de l'état estimé dudit au moins un premier moteur, ledit état estimé comprenant, outre sa vitesse, le flux électrique dudit au moins un premier moteur.

Selon un mode de réalisation de l'invention, l'estimateur d'état du au moins un premier moteur est apte à calculer l'évolution au cours du temps de l'état estimé dudit au moins un premier moteur, ledit état estimé comprenant, outre sa vitesse, l'angle du rotor dudit au moins un premier moteur.

Selon l'invention, ledit au moins un premier moteur peut consister en une pluralité de moteurs connectés en parallèle.

**Brève description des figures**

D'autres caractéristiques et avantages vont apparaître dans la description détaillée qui suit faite en regard des dessins annexés qui représentent :

- la figure 1 : le schéma de principe d'un système comprenant un variateur de vitesse contrôlant au moins deux moteurs en parallèle ;

- la figure 2 : le schéma de séquence temporel de la méthode selon l'invention.

**Description détaillée d'au moins un mode de réalisation**

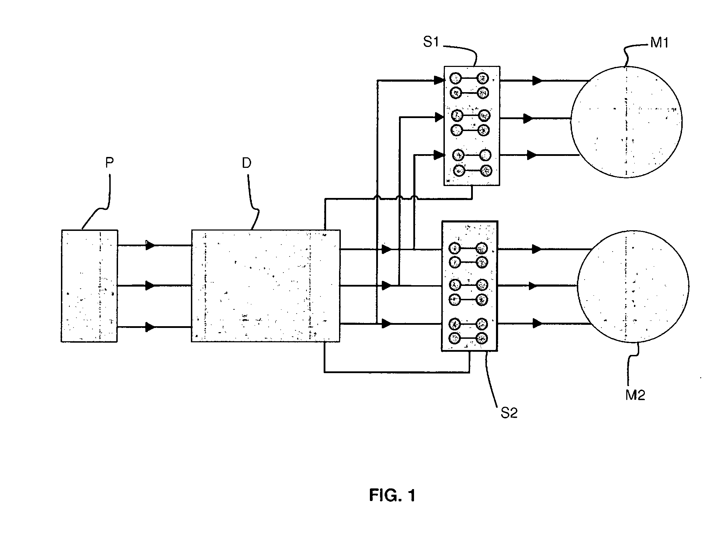

En référence à la figure 1, un variateur de vitesse D, alimenté par un réseau d'alimentation P, est connecté à deux moteurs M1, M2 en parallèle par l'intermédiaire de deux contacteurs respectifs S1, S2. La méthode selon l'invention se situe dans le contexte où un premier moteur M1 est en charge, connecté au variateur de vitesse D, lorsqu'un ordre de démarrage d'un moteur additionnel M2 est donné. L'invention propose une séquence permettant d'aboutir à une situation dans laquelle le premier moteur M1 et le moteur additionnel M2 sont connectés au variateur de vitesse D, sans que la connexion à chaud du moteur additionnel M2 n'engendre de pic de courant potentiellement dangereux pour ledit moteur additionnel M2.

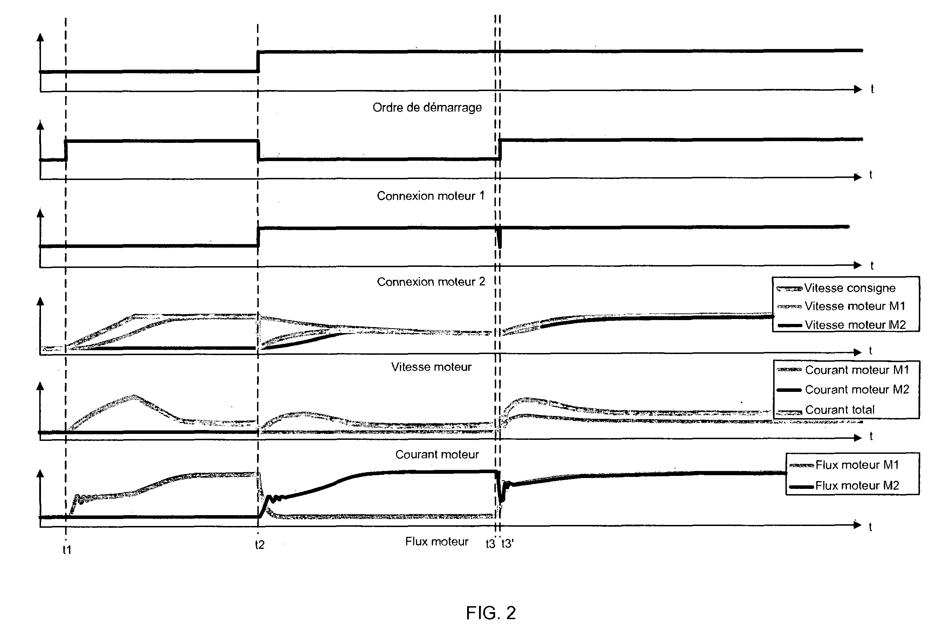

La figure 2 présente le séquencement temporel de la méthode selon l'invention.

Comme mentionné précédemment, la méthode selon l'invention est mise en oeuvre dans le contexte où au moins un premier moteur M1 est en charge, démarré depuis un instant t1 et contrôlé par un variateur de vitesse D, et où un ordre de démarrage d'un moteur additionnel M2, en parallèle dudit au moins un premier moteur M1, est donné à un instant t2.

L'état complet d'un moteur tel que le premier moteur M1 ou le moteur additionnel M2 est donné par les équations ci-dessous. Concernant l'état mécanique (vitesse, angle) et l'état électrique (flux, courant) dudit moteur, les équations suivantes sont vérifiées :

$$(1) \qquad L_F \frac{di_s}{dt} = u_s - \left(R_s + \dot{R}_{req} + jL_F \omega_s\right)i_s + \left(T_r^{-1} - j\omega_r\right)\varphi$$

$$(2) \qquad \frac{d\varphi_r}{dt} = -\left(T_r^{-1} + j(\omega_s - \omega_r)\right)\varphi_r + R_{req}i_s$$

$$(3) \qquad \frac{J}{n_p}\frac{d\omega_r}{dt} = \frac{3}{2}n_p \operatorname{Im}\left(\varphi_r^* i_s\right) - \tau$$

Avec :

$$\frac{d\theta}{dt} = \omega_r$$

$$i_s = i_{sd} + j i_{sq}$$

$$\varphi_r = \varphi_{rd} + j \varphi_{rq}$$

Et :

$\omega_r$ : la vitesse de rotation du rotor
$\theta$ : l'angle du rotor
$\omega_s$ : la vitesse de rotation statorique
$i_s$ : le courant stator
$u_s$ : la tension appliquée
$\varphi_r$ : le flux rotor

Les paramètres moteurs sont :

$R_s$ : la résistance statorique
$L_F$ : l'inductance de fuite

$R_{req}$ : la résistance rotor équivalente $\left( R_{req} = R_r \left( \dfrac{L_M}{L_r} \right)^2 \right)$ avec

$R_r$ : la résistance rotor
$L_M$ : l'inductance mutuelle
$L_r$ : l'inductance rotor

$T_r$ : la constante de temps rotor $\left( T_r = \dfrac{R_r}{L_r} \right)$

$J$ : l'inertie du rotor
$n_p$ : le nombre de paires de pôles

Dans ce contexte, la méthode selon l'invention comprend un ensemble d'étapes successives dont le séquencement est représenté à la figure 2.

La première étape consiste à déconnecter ledit au moins un premier moteur M1 au moment où l'ordre de démarrage du moteur additionnel M2 est donné, à l'instant t2. Par conséquent, comme le montrent les diagrammes de la figure 2, la vitesse du au moins un premier moteur M1 décroît, son flux électrique décroît très vite et son courant s'annule.

Du fait de l'annulation du courant présent dans le premier moteur M1, les équations (1), (2) et (3) deviennent :

$$(1) \qquad u_{s1} = -\left( T_r^{-1} - j\omega_{r1} \right) \varphi_{r1}$$

$$(2) \qquad \frac{d\varphi_{r1}}{dt} = -T_r^{-1} \varphi_{r1}$$

$$(3) \quad \frac{J}{n_p} \frac{d\omega_{r1}}{dt} = -\tau$$

Avec :

$$\frac{d\theta_1}{dt} = \omega_{r1}$$

$$i_{s1} = 0$$

$$\omega_{s1} = \omega_{r1}$$

Un estimateur, préalablement établi par des méthodes connues, calcule l'évolution au cours du temps d'un état estimé dudit au moins un premier moteur M1. Cet état estimé présente au moins une composante mécanique comprenant au moins la vitesse du au moins un premier moteur M1. Cette composante mécanique est estimée à partir d'un modèle de couple de charge de l'application considérée. Par exemple, le couple de charge d'un ventilateur présente une forme en $k*w_1^2$, avec $w_1$ la vitesse du moteur dudit ventilateur. L'état mécanique peut également comprendre l'angle du rotor du au moins un premier moteur M1 pour un fonctionnement optimal du séquencement proposé, n'engendrant aucun pic de courant lors des changements de phases.

L'état estimé calculé par l'estimateur peut également présenter une composante électrique comprenant le flux électrique du au moins un premier moteur M1 et / ou l'intensité du courant du au moins un premier moteur M1.

Sensiblement au même instant t2 auquel l'ordre de démarrage du moteur additionnel M2 est donné, c'est-à-dire simultanément ou juste avant ou juste après, le moteur additionnel M2 est connecté au variateur de vitesse D, avec une vitesse de consigne initialement nulle, puis une consigne globale de tendre vers l'état estimé du au moins un premier moteur M1. Tendre vers l'état estimé du au moins un premier moteur M1 consiste pour le moteur additionnel M2 au minimum à atteindre à un instant donné, via une consigne adaptée, une vitesse égale à la vitesse du au moins un premier moteur M1 au même instant.

Pour un fonctionnement optimal, tendre vers l'état estimé du premier moteur M1 consiste pour le moteur additionnel M2 à atteindre la vitesse, l'angle et le flux estimés du premier moteur M1. Ainsi, aucun surcourant n'est produit lors de la fermeture des contacteurs et l'état du premier moteur M1 et du moteur additionnel M2 (courant, flux, vitesse, angle) est maîtrisé à tout moment.

Lors de la reconnexion sensiblement simultanée du premier moteur M1 et du moteur additionnel M2, les équations (1), (2) et (3) s'écrivent :

$$(1) \quad L_F \frac{d\Delta i_s}{dt} = -\left(R_s + R_{req} + jL_F\omega_s\right)\Delta i_s + \left(T_r^{-1} - j\omega_{r1}\right)\Delta\varphi_r - j\Delta\omega_r$$

$$(2) \quad \frac{d\Delta\varphi_r}{dt} = -\left(T_r^{-1} + j\omega_s\right)\Delta\varphi_r + j\Delta\omega_r\varphi_{r2} + R_{req}\Delta i_s$$

$$(3) \quad \frac{J}{n_p}\frac{d\Delta\omega_r}{dt} = \frac{3}{2}n_p\left(\Delta\varphi_{rd}i_{sq1} + \varphi_{rd2}\Delta i_{sq} - \Delta\varphi_{rq}i_{sd1} + \varphi_{rq2}\Delta i_{sd}\right)$$

Avec :

$$\frac{d\Delta\theta}{dt} = \Delta\omega_r \quad \text{et} \quad \Delta x = x_1 - x_2$$

Dans le cadre de moteurs à induction, l'amplitude du flux électrique chutant assez rapidement lors d'une déconnexion, la synchronisation unique de la vitesse permet déjà de réduire considérablement les pics de courant, à condition que le branchement du moteur additionnel M2 se fasse suffisamment longtemps après la première déconnexion du au moins un premier moteur M1, afin de garantir que le flux électrique résiduel du au moins un premier moteur M1 est faible. Dans le cadre de moteurs synchrones à aimant permanent, l'amplitude du flux électrique étant fixe, il est nécessaire de synchroniser l'angle et la vitesse du moteur additionnel M2 sur l'angle et la vitesse du au moins un premier moteur M1, le flux n'étant pas contrôlé, mais supposé identique.

Dès l'instant t3' où l'état du moteur additionnel M2 atteint l'état estimé du au moins un premier moteur M1, ledit au moins un premier moteur M1 est reconnecté sur le variateur de vitesse D.

Selon un mode de réalisation préféré, avant de reconnecter ledit au moins un premier moteur M1 sur le variateur de vitesse D, le moteur additionnel M2 est brièvement déconnecté du variateur de vitesse D à l'instant t3, avant que le au moins un premier moteur M1 et le moteur additionnel M2 ne soient simultanément reconnectés sur le variateur de vitesse D, à l'instant t3'. De cette manière, au moment de la reconnexion, le au moins un premier moteur M1 et le moteur additionnel M2 présentent une intensité de courant les traversant égale car cette dernière a été ramenée à zéro par la déconnexion. Les deux états complets des moteurs M1 et M2 (vitesse, angle, flux, courant) sont donc entièrement égaux.

A compter de l'instant t3' où le au moins un premier moteur M1 et le moteur additionnel M2 sont tous deux connectés au variateur de vitesse D, ces derniers sont simultanément contrôlés par ledit variateur de vitesse D.

En résumé, l'invention présente une méthode de branchement à chaud d'un moteur additionnel sur un variateur de vitesse en parallèle d'au moins un premier moteur déjà en charge.

Il est à noter que pour la mise en oeuvre de la méthode selon l'invention, ledit au moins un premier moteur peut être un ensemble de moteurs considérés comme un moteur équivalent.

## Revendications

1. Méthode de connexion d'un moteur additionnel (M2) sur un variateur de vitesse (D) en parallèle d'au moins un premier moteur (M1) en charge commandé par ledit variateur de vitesse (D),
   **caractérisée en ce qu'**elle comprend les étapes suivantes :

   • la déconnexion du au moins un premier moteur (M1) du variateur de vitesse (D) ;
   • la mise en oeuvre d'un estimateur d'état du au moins un premier moteur (M1), basé sur un modèle de charge préalablement établi dudit au moins un premier moteur (M1), ledit estimateur d'état étant apte à calculer l'évolution au cours du temps d'un état estimé du au moins un premier moteur (M1), ledit état estimé comprenant au moins la vitesse dudit au moins un premier moteur (M1) ;
   • la connexion du moteur additionnel (M2) sur le variateur de vitesse (D) ;
   • le démarrage du moteur additionnel (M2) avec pour consigne d'atteindre l'état estimé du au moins un premier moteur (M1) ;
   • lorsque l'état du moteur additionnel (M2) atteint l'état estimé du au moins un premier moteur (M1), la reconnexion dudit au moins un premier moteur (M1).

2. Méthode selon la revendication 1, **caractérisée en ce qu'**elle comprend en outre, préalablement à l'étape de reconnexion du au moins un premier moteur (M1), une étape de déconnexion du moteur additionnel (M2) suivie d'une étape de reconnexion du moteur additionnel (M2) sensiblement simultanément à la reconnexion du au moins un premier moteur (M1).

**3.** Méthode selon l'une quelconque des revendications précédentes, **caractérisée en ce que** l'estimateur d'état du au moins un premier moteur (M1) est apte à calculer l'évolution au cours du temps de l'état estimé dudit au moins un premier moteur (M1), ledit état estimé comprenant, outre sa vitesse, le flux électrique dudit au moins un premier moteur (M1).

**4.** Méthode selon l'une quelconque des revendications précédentes, **caractérisée en ce que** l'estimateur d'état du au moins un premier moteur (M1) est apte à calculer l'évolution au cours du temps de l'état estimé dudit au moins un premier moteur (M1), ledit état estimé comprenant, outre sa vitesse, l'angle du rotor dudit au moins un premier moteur (M1).

**5.** Méthode selon l'une quelconque des revendications précédentes, **caractérisée en ce que** ledit au moins un premier moteur (M1) consiste en une pluralité de moteurs connectés en parallèle.

**Patentansprüche**

**1.** Verfahren zum Verbinden eines zusätzlichen Motors (M2) auf einem Frequenzumrichter (D) parallel mit mindestens einem ersten Motor (M1) unter Last, der von dem Frequenzumrichter (D) gesteuert wird, **dadurch gekennzeichnet, dass** es die folgenden Schritte aufweist:

  • Trennen des mindestens einen ersten Motors (M1) von dem Frequenzumrichter (D);
  • Umsetzen eines Zustandsschätzers des mindestens einen ersten Motors (M1) basierend auf einem Lastmodell, das zuvor von dem mindestens einen ersten Motor (M1) erstellt wurde, wobei der Zustandsschätzer geeignet ist, um die zeitliche Entwicklung eines geschätzten Zustands des mindestens einen ersten Motors (M1) zu berechnen, wobei der geschätzte Zustand mindestens die Drehzahl des mindestens einen ersten Motors (M1) aufweist;
  • Verbinden des zusätzlichen Motors (M2) mit dem Frequenzumrichter (D);
  • Anlassen des zusätzlichen Motors (M2) mit der Anweisung, den geschätzten Zustand des mindestens einen ersten Motors (M1) zu erreichen;
  • wenn der Zustand des zusätzlichen Motors (M2) den geschätzten Zustand des mindestens einen ersten Motors (M1) erreicht, erneutes Verbinden des mindestens einen ersten Motors (M1).

**2.** Verfahren nach Anspruch 1, **dadurch gekennzeichnet, dass** es ferner vor dem Schritt des erneuten Verbindens des mindestens einen ersten Motors (M1) einen Schritt des Trennens des zusätzlichen Motors (M2) gefolgt von einem Schritt des erneuten Verbindens des zusätzlichen Motors (M2) im Wesentlichen gleichzeitig mit dem neuen Verbinden des mindestens einen ersten Motors (M1) aufweist.

**3.** Verfahren nach einem der vorhergehenden Ansprüche, **dadurch gekennzeichnet, dass** der Zustandsschätzer des mindestens einen ersten Motors (M1) geeignet ist, um die zeitliche Entwicklung des geschätzten Zustands des mindestens einen ersten Motors (M1) zu berechnen, wobei der geschätzte Zustand neben seiner Drehzahl den Stromfluss des mindestens einen ersten Motors (M1) aufweist.

**4.** Verfahren nach einem der vorhergehenden Ansprüche, **dadurch gekennzeichnet, dass** der Zustandsschätzer des mindestens einen ersten Motors (M1) geeignet ist, um die zeitliche Entwicklung des geschätzten Zustands des mindestens einen ersten Motors (M1) zu berechnen, wobei der geschätzte Zustand neben seiner Drehzahl den Winkel des Rotors des mindestens einen ersten Motors (M1) aufweist.

**5.** Verfahren nach einem der vorhergehenden Ansprüche, **dadurch gekennzeichnet, dass** der mindestens eine erste Motor (M1) aus einer Vielzahl parallel angeschlossener Motoren besteht.

**Claims**

**1.** Method for connecting an additional motor (M2) to a variable speed drive (D) in parallel with at least one first motor (M1) under load, controlled by the said variable speed drive (D), **characterized in that** it comprises the following steps:

  • the disconnecting of the at least one first motor (M1) from the variable speed drive (D);

• the implementing of a state estimator of the at least one first motor (M1), based on a previously established load model of the said at least one first motor (M1), the said state estimator being able to calculate the evolution over time of an estimated state of the at least one first motor (M1), the said estimated state comprising at least the speed of the said at least one first motor (M1);
• the connecting of the additional motor (M2) to the variable speed drive (D);
• the starting of the additional motor (M2) with the directive of attaining the estimated state of the at least one first motor (M1);
• when the state of the additional motor (M2) attains the estimated state of the at least one first motor (M1), the reconnecting of the said at least one first motor (M1).

2. Method according to Claim 1, **characterized in that** it furthermore comprises, prior to the step of reconnecting the at least one first motor (M1), a step of disconnecting the additional motor (M2), followed by a step of reconnecting the additional motor (M2) substantially simultaneously with the reconnecting of the at least one first motor (M1).

3. Method according to any one of the preceding claims, **characterized in that** the state estimator of the at least one first motor (M1) is able to calculate the evolution over time of the estimated state of the said at least one first motor (M1), the said estimated state comprising, in addition to its speed, the electric flux of the said at least one first motor (M1).

4. Method according to any one of the preceding claims, **characterized in that** the state estimator of the at least one first motor (M1) is able to calculate the evolution over time of the estimated state of the said at least one first motor (M1), the said estimated state comprising, in addition to its speed, the angle of the rotor of the said at least one first motor (M1).

5. Method according to any one of the preceding claims, **characterized in that** the said at least one first motor (M1) consists of a plurality of motors connected in parallel.

FIG. 1

FIG. 2

**EP 2 546 976 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1426620 A
- JP 58207897 B
- JP 59198887 B
- JP 59123489 B